Europäisches Patentamt

European Patent Office

Office européen des brevets

(19)

(11) Publication number: **0 343 751**

**A1**

# EUROPEAN PATENT APPLICATION

(21) Application number: 89201323.6

(51) Int. Cl.⁴: **B62J 13/04**

(22) Date of filing: 22.05.89

(30) Priority: 24.05.88 NL 8801324

(43) Date of publication of application:
29.11.89 Bulletin 89/48

(84) Designated Contracting States:
AT BE CH DE ES FR IT LI NL SE

(71) Applicant: **A. GAASTRA BEHEERMIJ. B.V.**
**De Blocq van Scheltingaweg 1**
**NL-8453 JB Oranjewoud(NL)**

(72) Inventor: **Gaastra, Andries**
**De Blocq van Scheltingaweg 1**
**NL-8453 JB Oranjewoud(NL)**

(74) Representative: **de Vries, Johannes Hendrik**
**Fokke et al**
**Octrooibureau Los en Stigter B.V. P.O. Box**
**20052**
**NL-1000 HB Amsterdam(NL)**

(54) Chain casing assembly for a bicycle.

(57) A chain casing assembly is provided which can be used on a bicycle having a derailleur-gear mechanism. The chain casing assembly mainly comprises a front casing (2), rear casing (1) and two funnel-shaped casing sections (3, 4) interconnecting these. All casing sections are releasably interconnected and comprise means for simplyfying the assembling and disassembling. For the protection of the rear casing (1) a protection brace can be provided.

fig.1

EP 0 343 751 A1

Xerox Copy Centre

## Chain casing assembly for a bicycle.

The invention relates to a chain casing assembly for a bicycle.

Chain casing assemblies for bicycles already exist in several types. A common feature of such known chain casing assemblies is that they are all meant for bicycles without a gear mechanism or for bicycles with a gear mechanism with internal gear. These known chain casing assemblies are not fit to be used on a bicycle having a derailleur-gear. However in the recreative sector there exists a large need for a chain casing assembly that can be applied to a bicycle having a derailleur-gear.

It is an object of the invention to provide a chain casing assembly for a bicycle which is fit to be used on a bicycle having a derailleur-gear.

As a result the chain casing assembly according to the invention is characterized in that it is adapted to be applied to a bicycle with a derailleur-gear and mainly comprises a rear casing surrounding the derailleur-gear mechanism and the freewheel with sprockets, a front casing surrounding the chain wheel as well as two funnel-shaped casing sections interconnecting the rear casing and the front casing and surrounding the chain sections that extend between the (a) chain wheel and one of the sprockets.

Because the chain casing assembly according to the invention comprises several separate sections, that is a rear casing, a front casing as well as two funnel-shaped casing sections, it is possible to obtain a chain casing assembly that is optimally adapted to the shape of the derailleur-gear mechanism and this chain casing assembly can be mounted effectively. The chain casing assembly according to the invention constitutes an substantially entirely closed construction having as a result that the gear mechanism of the bicycle and all movable parts of the bicycle cooperating therewith are effectively protected against contamination and the like.

According to a preferred embodiment of the chain casing assembly according to the invention the rear casing, the front casing and the funnel-shaped casing sections are releasably connected to each other and/or to the bicycle. According to this embodiment a chain casing assembly is obtained that can be assembled and disassembled very easily and quickly. This provides the possibility to remove the chain casing assembly, for example in good weather conditions.

Further an embodiment of the chain casing assembly is advantageous in which it comprises a plate-shaped bicycle rear axle attachable mounting section to which the rear casing is releasably attachable, wherein the rear casing comprises at its both sides a slot extending rearwardly from the forward edge of the rear casing for receiving the rear axle and the wheelhub at both sides of the freewheel.

With a chain casing assembly shaped like this mounting the rear casing is very simple. The plate-shaped mounting section can be mounted to the rear axle permanently, whereas the rear casing can be simply slided along the freewheel from the rearward side whereby both slots receive the rear axle. By means of appropriate fixing means, for example screws, the rear casing then can be attached to the mounting section.

For receiving the derailleur-gear mechanism of the bicycle it is advantageous if the rear casing comprises a lower section positioned below the slots with a width adapted to the setting motion of the rear-derailleur bracket as well as an upper section positioned above the slots with a smaller width adapted to the smaller width of the freewheel.

If further the mounting section is provided with an outwardly and downwardly directed protection brace that extends at least partially outwards of the lower section of the rear casing, it can be obtained that especially the rear casing is protected against damaging or distorting if the bicycle falls aside.

A simple assembling of the front casing is obtained if according to a further embodiment of the chain casing assembly according to the invention the front casing comprises an inner casing positionable between the chain wheel(s) and the bicycle frame and an outer casing releasably connectable therewith that can be positioned at the outer side of the chain wheel(s).

Correspondingly in an other preferred embodiment it is possible that the funnel-shaped casing sections each comprises at their lower side a mounting partition that extends along their entire length and that can be sealingly closed by means of a snaplock or alike. Positioning these funnel-shaped casing sections around the corresponding chain sections now is simple without the chain having to be disassembled.

Hereinafter the invention will be elucidated by means of the drawing in which an embodiment of the chain casing assembly according to the invention is illustrated.

Figure 1 shows part of a bicycle having mounted thereon a chain casing assembly according to the invention;

figure 2 shows some parts of the chain casing assembly according to figure 1 in a perspective view, and

figure 3 shows in more detail the chain casing assembly according to figure 1 on an enlarged scale.

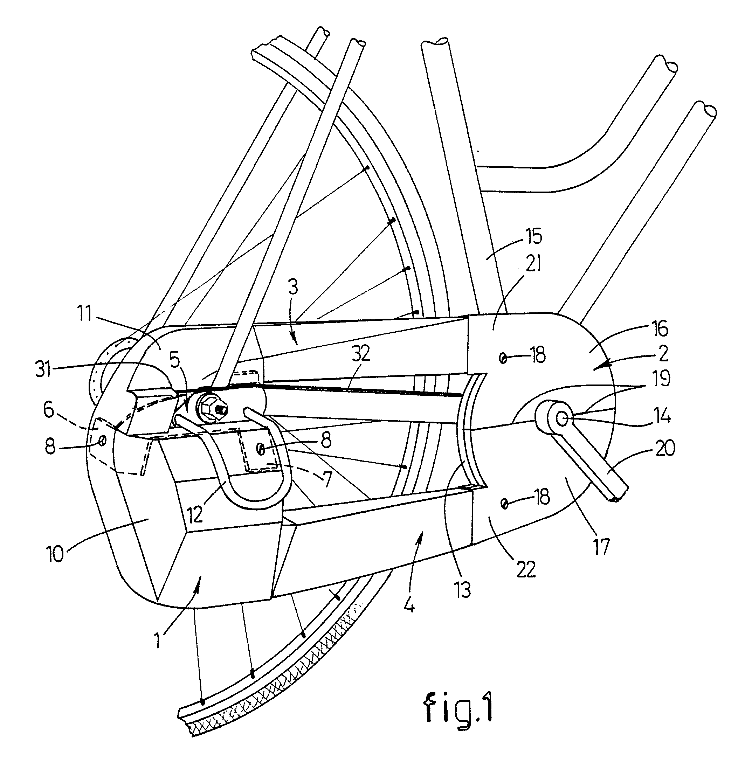

The chain casing assembly illustrated in figure 1 mainly comprises a rear casing 1, a front casing 2, as well as two funnel-shaped casing sections 3 and 4.

In the assembled position of the chain casing assembly represented in figure 1 the rear casing 1 surrounds the (not shown) derailleur-gear mechanism of the illustrated bicycle. Further the rear casing 1 surrounds the freewheel and the sprockets attached thereto.

For the assembling of the rear casing 1 on the bicycle a plate-shaped mounting section 5 is provided on the rear axle of the bicycle. This mounting section 5 comprises flanged lips 6, 7 in which threaded or quick-lock fit openings 8 are provided. In the rear casing 1 also openings are provided which, in the assembled position of the rear casing 1, coincide with the openings 8 of the mounting section 5. For connecting the rear casing 1 to the mounting section 5 it is possible now to apply fixing means such as screws of the like via the openings in the rear casing 1 in the threaded opening 8 of the mounting section 5. Of course different mounting methods are possible.

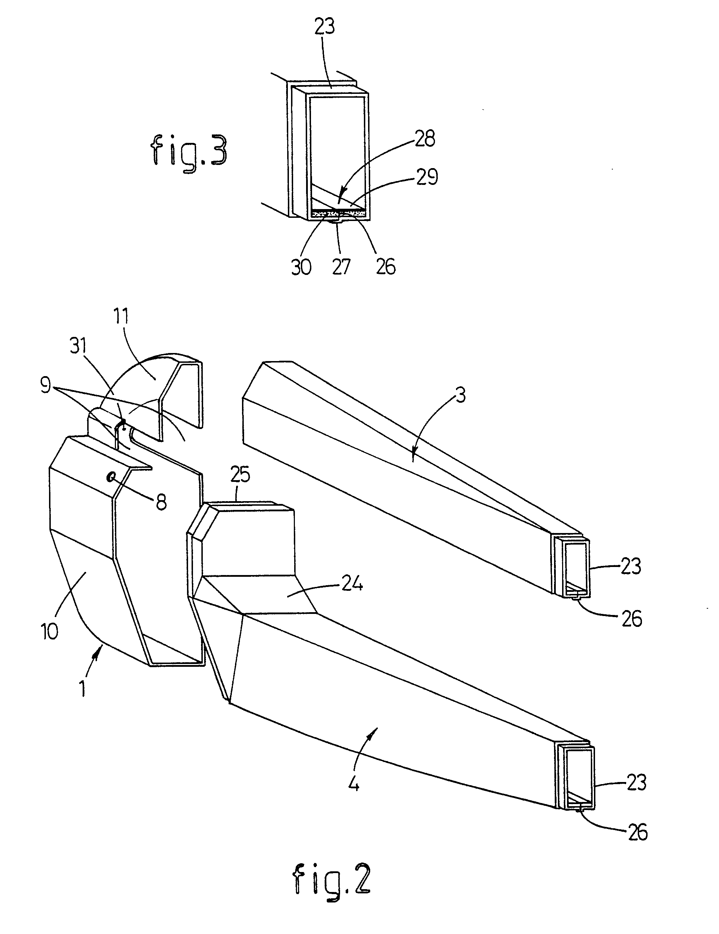

As appears especially from figure 2 the rear casing 1 comprises at each of its two sides a slot 9 extending rearwardly from the front edge. When applying the rear casing 1 to the bicycle these slots 9 receive the rear axle and the wheel hub of the bicycle.

The rear casing comprises a lower section 10 positioned below the slots 9 with an internal width adapted to the setting motion of the not shown rear derailleur bracket. During said setting motion such a rear derailleur bracket should not contact the side walls of the lower section 10 of the rear casing 1.

Above the slots 9 an upper section 11 of the rear casing 1 is positioned. The internal width of this upper section 11 is such that the freewheel (not shown either) can be received with some play. Generally the internal width of the upper section 11 will be smaller than the internal width of the lower section 10. The upper section 11 further comprises a lateral opening 31 for passing the gear activation cable 32.

The mounting section 5 further comprises an outwardly and downwardly directed protection brace 12 that extends at least partially outward of the lower section 10 of the rear casing 1. This protection brace prevents the lower section 10 of the rear casing 1 to be damaged or distorted when the bicycle falls aside.

The front casing 2 of the chain casing assembly firstly comprises an inner casing 13 attachable to the bicycle frame 15. This inner casing 13, which in a way known per se is centrally provided with an opening for passing the crankshaft 14 of the bicycle, has the shape of a half bowl. This inner casing 13 extends between the bicycle frame 15 and the (not visible) chain wheel. At the opposite side of the chain wheel (or chain wheels) an outer casing is provided comprising an upper section 16 and the lower section 17. The upper section 16 and the lower section 17 together constitute a half bowl substantially being the mirror image of the half bowl formed by the inner casing 13. In a way not shown further the upper section 16 and the lower section 17 are connected to the inner casing 13 by means of fixing means 18.

The partition 19 between the upper section 16 and the lower section 17 allows for simple assembling and disassembling this section of the front casing 2 without the crank 20 of the crankshaft 14 having to be removed. As shown this partition 19 therefore meets the opening for the crankshaft 14 of the bicycle.

In a way not shown in detail it is possible that the front casing 2 is internally provided with chain guide means. If these chain guide means are provided at the location of the fixing means 18 in the front casing 2 these also can function as attachment point for the said fixing means 18.

For obtaining a proper seal of the front casing 2 the different parts thereof, to be the inner casing 13, the upper section 16 and the lower section 17 are sealingly, partially overlapping, interconnected. Thus the upper section 16 will partially overlap the lower section 17 outwardly for obtaining a good water drainage.

The rear casing 1 and the front casing 2 are interconnected via funnel-shaped casing sections 3 and 4. These funnel-shaped casing sections surround chain sections extending between the chain wheel(s) and one of the sprockets. As is visible in figure 1 the front casing 2 comprises two connection stubs 21 and 22 to which the casing section 3 and casing section 4, respectively, are connected. As shown in figure 2 the casing sections 3 and 4 have at their frontal ends reduced sections 23 which in the assembled position of the chain casing assembly at the connection stubs 21 and 22 partially inwardly overlap the front casing 2. Like this a good connection on the front casing 2 and a clearance between the crank and the casing sections 3 and 4 is obtained.

The upper funnel-shaped casing section 3 comprises at its rearward end such a shape that the upper section 11 of the rear casing 1 is partially overlapped outwardly. The rearward end of the lower funnel-shaped casing section is shaped like a tapering reducing section 24 that meets the lower section 11 of the rear casing 1. At its end this reducing section 24 too comprises a reduced section 25 partially overlapping the rear casing pivotably.

In the mounted position the casing sections 3 and 4 sealingly join the rear casing 1 and the front casing 2. Like this a substantially closed chain casing assembly is obtained which effectively excludes contaminations or the like.

For enabling the assembling of the funnel-shaped casing sections 3 and 4 without disassembling the chain of the bicycle these funnel-shaped casing sections 3 and 4 each comprise at their lowermost side a mounting partition 26 extending along their entire length. This mounting partition enables opening the lowermost side of the casing sections 3 and 4 for passing the chain of the bicycle. After the casing sections 3 and 4 are applied around the chain like this the mounting partition 26 can be sealingly closed by means of snap locks 27 or the like.

As appears especially from figure 3 it is possible to internally provide the funnel-shaped casing sections 3 and 4 at their lower side with a wear proof sound damping cover 28. This sound damping cover comprises a wear proof upper layer 29 and sound damping material 30. Just as the casing sections 3 and 4 this sound damping cover 28 comprises a mounting partition coinciding with the mounting partition 26 of the chain sections 3 and 4. Especially when changing the gear this sound damping cover prevents the chain from striking against the casing sections 3 and 4, respectively, thus producing noise.

The shape of several parts of the chain casing assembly has to be adapted to the shape of the bicycle, as well as to the shape of the provided gear assembly. Moreover one should take into account the setting motion of the parts of the gear mechanism as well as the motions of the chain. Thus it is possible that the lowermost casing section 4 has a somewhat convex shaped lower side which corresponds with the most usual position of the chain.

The described chain casing assembly according to the invention can be removed very easily, thus making it possible to use the bicycle under good weather conditions without such a chain casing assembly. Furthermore a quick disassembling is advantageous for maintenance and for removing the rear wheel, for example if changing a tire.

Except for the mounting section 5 and the protection brace 12 which have to be made of metal, the chain casing assembly can be manufactured entirely from plastic material, thus keeping its weight very low. Because all sections closely interconnect and because the chain casing assembly in its assembled position constitutes a substantially entirely closed construction this chain casing assembly however has a large strength and stiffness.

The invention is not limited to the embodiment described before which can be varied widely within the scope of the invention.

## Claims

1. Chain casing assembly for a bicycle, **characterized** in that it is adapted to be applied to a bicycle with a derailleur-gear and mainly comprises a rear casing (1) surrounding the derailleur-gear mechanism and the freewheel with sprockets, a front casing (2) surrounding the chain wheel (3) as well as two funnel-shaped casing sections (3, 4) interconnecting the rear casing (1) and the front casing (2) and surrounding the chain sections that extend between the (a) chain wheel and one of the sprockets.

2. Chain casing assembly according to claim 1, **characterized** in that the rear casing (1), the front casing (2) and the funnel-shaped casing sections (3, 4) are releasably connected to each other and/or to the bicycle.

3. Chain casing assembly according to claim 2, **characterized** in that it comprises a plate-shaped bicycle rear axle attachable mounting section (5) to which the rear casing (1) is releasably attachable, wherein the rear casing (1) comprises at its both sides a slot (9) extending rear-wardly from the forward edge of the rear casing (1) for receiving the rear axle and the wheelhub at both sides of the freewheel.

4. Chain casing assembly according to claim 3, **characterized** in that the rear casing (1) comprises a lower section (10) positioned below the slots (9) with a width adapted to the setting motion of the rear-derailleur bracket as well as an upper section (11) positioned above the slots (9) with a smaller width adapted to the smaller width of the freewheel.

5. Chain casing assembly according to one of the claims 1-4, **characterized** in that the rear casing (1) is provided with a passage (31) for a gear activation cable (32).

6. Chain casing assembly according to claim 5, **characterized** in that the mounting section (5) is provided with an outwardly and downwardly directed protection brace (12) that extends at least partially outwards of the lower section (10) of the rear casing (1).

7. Chain casing assembly according to one of the claims 1-6, **characterized** in that the front casing (2) comprises an inner casing (13) positionable between the chain wheel(s) and the bicycle frame (15) and an outer casing (16, 17) releasably connectable therewith that can be positioned at the outer side of the chain wheel(s).

8. Chain casing assembly according to claim 7, **characterized** in that the outer casing comprises an upper section (16) and a lower section (17) wherein the partition (19) between the upper casing (16) and the lower casing (17) meets an opening formed in the outer casing for passing the bicycle crankshaft (14).

9. Chain casing assembly according to claim 7 or 8, **characterized** in that the front casing (2) incorporates chain guide means.

10. Chain casing assembly according to one of the claims 7-9, **characterized** in that the different front casing sections (13, 16, 17) are sealingly, partially overlapping, interconnected.

11. Chain casing assembly according to one of the claims 1-10, **characterized** in that the funnel-shaped casing sections (3, 4) each comprises at their lower side a mounting partition (26) that extends along their entire length and that can be sealingly closed by means of a snaplock (27) or alike.

12. Chain casing assembly according to one of the claims 1-11, **characterized** in that the funnel-shaped casing sections (3, 4) at their lower side are inwardly provided with a wear-proof sound-damping cover (28).

13. Chain casing assembly according to one of the claims 1-12, **characterized** in that the lowermost of the funnel-shaped casing sections (4) has a somewhat convex shaped lower side.

14. Chain casing assembly according to one of the claims 1-13, **characterized** in that the funnel-shaped casing sections (3, 4) partially inwardly overlap the front casing (2).

15. Chain casing assembly according to one of the claims 1-14, **characterized** in that the uppermost of the funnel-shaped casing sections (3) partially outwardly overlaps the rear casing (1).

16. Chain casing assembly according to one of the claims 1-15, **characterized** in that the lowermost of the funnel-shaped casing sections (4) meets the rear casing (1) via a tapering reducing section (24).

17. Chain casing assembly according to one of the claims 1-16, **characterized** in that the rear casing (1), front casing (2) and funnel-shaped casing sections (3, 4) are made from plastic material.

fig.1

fig.3

23

28

29

30  27  26

fig.2

11

31

9

3

8

25

10

24

1

23

26

4

23

26

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 647 141 (GORGIN) <br> * Pages 1,2; figures 1-6 * | 1,2,8 | B 62 J 13/04 |
| A | EP-A-0 012 454 (MAEDA INDUSTRIES) <br> * Figures 1-12; page 2, line 29 - page 8, line 6 * | 1 | |
| A | FR-A-2 236 714 (JUY) <br> * Figures 1-9; page 2, line 25 - page 4, line 36 * | 1 | |
| A | FR-A-2 322 772 (CYCLES PEUGEOT) <br> * Figures 1-3; page 2, line 9 - page 4, line 25 * | 1 | |

TECHNICAL FIELDS
SEARCHED (Int. Cl.4)

B 62 J

The present search report has been drawn up for all claims

| Place of search | Date of completion of the search | Examiner |
|---|---|---|
| THE HAGUE | 05-09-1989 | VANNESTE M.A.R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)